(19) Europäisches Patentamt
European Patent Office
Office européen des brevets

(11) **EP 1 665 236 B1**

(12) **EUROPEAN PATENT SPECIFICATION**

(45) Date of publication and mention of the grant of the patent:
**12.05.2010 Bulletin 2010/19**

(51) Int Cl.:
***G11B 7/0045*** (2006.01)

(21) Application number: **04701129.1**

(86) International application number:
**PCT/KR2004/000026**

(22) Date of filing: **09.01.2004**

(87) International publication number:
**WO 2005/024802 (17.03.2005 Gazette 2005/11)**

(54) **OPTICAL RECORDING /REPRODUCING APPARATUS AND METHOD FOR DETERMINING OPTICAL POWER THEREOF**

OPTISCHE AUFZEICHNUNGS-/WIEDERGABEVORRICHTUNG UND VERFAHREN ZUR BESTIMMUNG IHRER OPTISCHEN LEISTUNG

APPAREIL D'ENREGISTREMENT/REPRODUCTION OPTIQUE ET PROCEDE PERMETTANT DE DETERMINER SA PUISSANCE OPTIMALE

(84) Designated Contracting States:
**DE FR GB IT NL**

(30) Priority: **09.09.2003 KR 2003063383**

(43) Date of publication of application:
**07.06.2006 Bulletin 2006/23**

(73) Proprietor: **SAMSUNG ELECTRONICS CO., LTD.**
**Suwon-si,**
**Gyeonggi-do 442-742 (KR)**

(72) Inventor: **KIM, Jae-hyun**
**Suwon-si,**
**Gyeonggi-do 442-470 (KR)**

(74) Representative: **Land, Addick Adrianus Gosling et al**
**Arnold & Siedsma**
**Sweelinckplein 1**
**2517 GK Den Haag (NL)**

(56) References cited:
**EP-A- 1 308 942      JP-A- 9 016 964**
**JP-A- 11 149 641     JP-A- 11 232 681**
**JP-A- 2001 176 078   JP-A- 2003 067 925**
**JP-A- 2003 085 761   US-A1- 2001 007 546**
**US-A1- 2002 136 123  US-A1- 2003 035 355**

**Description**

The present invention relates to an optical disk recording/reproducing apparatus and a method for determining optimal power thereof, and more particularly, to an optical disc recording/reproducing apparatus and a method for determining power optimal for the characteristics of an optical disk in order for data to be recorded in an optimal state when the data is recorded on the optical disk.

In general, optical disks are classified into reproduction-dedicated disks such as compact disk-ROM (CD-ROM), Digital Versatile disk-ROM (DVD-ROM), and the like, write-once recordable disks such as CD-Recordable (CD-R), DVD-R, and the like, and rewritable disks such as CD-Rewritable (CD-RW), DVD-RAM, and the like, depending upon data record capability.

An optical disk recording/reproducing apparatus can drive a laser diode (LD) provided on an optical pickup to record information onto an optical disk or reproduce recorded information from the optical disk. In order to record information onto the optical disk, the optical disk recording/reproducing apparatus drives the laser diode (LD) to irradiate a laser beam of relatively high power since the physical characteristics of an information recording layer existing on the optical disk have to be changed, and, in order to reproduce information recorded on the optical disk, the optical disk recording/reproducing apparatus drives the laser diode (LD) to irradiate a laser beam of relatively low power since the physical characteristics of the information recording layer do not have to be changed.

However, the optimal recording power changes depending upon the characteristics of each optical disk such as optical disk kind, optical disk maker, chemical properties of recording layers of optical disks, and so on. Accordingly, most optical disk recording/reproducing apparatuses are designed to perform a process for determining an optimal recording power at the initial stage.

In general, the optimal power is determined by performing recording tests on a certain area of an optical disk. However, the number of parameters to be determined to obtain the optimal power is increasing together with the recent commercialization of optical disk recording/reproducing apparatuses that can record and reproduce information onto and from diverse kinds of optical disks. Accordingly, it takes lots of time to perform recording tests for all possible combinations of the parameter values, so a method is required to solve such a problem.

US 2003/0035355 discloses an optimal power determination method for recording/reproducing information onto and out of an optical disk, comprising the steps of:

performing, combination tables each formed with a plurality of combinations of preselected values for parameters for power determination,
recording tests state with each combination; and
determining values for the parameters from a result of the recording test performances to determine the inproved pointers.

It is an object of the present invention to improved upon the above mentioned prior art, especially with respect to reducing the time needed for an optimal power determination.
The present invention provides an optimal power determination method for recording information onto an optical disk, comprising the steps of:

deciding (S210) a kind of a loaded optical disk and reading out (S220) a combination table corresponding to the decided kind of the loaded optical disk before performing the recording tests, wherein the combination tables are prepared and stored by optical disk kind in advance, and wherein each of said combination tables comprises a plurality of combinations of preselected values for parameters for optical power determination,
performing (S230) recording tests for each of said plurality of combinations of preselected values for parameters for optical power determination.
determining (S240, S250) optimal values for the parameters from a result of a recording test performance to determine the power, wherein the step for determining the optimal values determines a combination of the parameter values based on first recording state information values obtained as a result of the recording tests and second recording state information values calculated from predictions of results for combinations of values of parameters not included in the combination tables from the first recording state information values; and
deciding a kind of a loaded optical disk and reading out a combination table corresponding to the decided kind of the loaded optical disk before performing the recording tests, wherein the combination tables are prepared and stored by optical disk kind in advance **characterized in that** are recorded with respect to each of said plurality of combinations of preselected values for parameters for optical power determination.

According to the present invention the time required for optimal power determination is reduced as combinations which are not included in the combination table are predicted based on jitter value obtained through the recording tests.

Furthermore the present invention provides:

An optical disk recording/reproducing apparatus for recording/reproducing information onto an optical disk, comprising:

a pickup unit for irradiating a beam onto the optical disk and recording/reproducing information;
a memory unit for storing combination tables each formed and registered in advance with a plurality of combinations of preselected values for parameters for determining an optimal power of the beam irradiated from the pickup unit,
a control unit for performing recording tests using the combination tables, wherein the control unit is adapted to determine a combination of the parameter values based on first recording state information values obtained as a result of the recording tests and second recording state information values calculated from predictions of results for combinations of values of parameters not included on the combination tables from the first recording state information values; and
wherein the combination tables are prepared and stored in the memory unit by optical disk type, and the control unit is adapted to decide a type of a loaded optical disk and for reading out a combination table corresponding to the decided kind of the loaded optical disk before performing the recording tests.

The combination table includes a limited number of combinations. The present invention performs recording tests as to each combination, and computes an optimal value for each parameter in consideration of interrelations with the other parameters from test results. That is, the combinations of values in the combination table are pre-selected values for the recording tests, and any one of the combinations is not determined as an optimal combination, but optimal parameter values are inferred and determined from the results of the recording tests. By doing so, the present invention can find out optimal parameter values in a short time period in consideration of mutual influences among parameters with the recording tests performed as many as the predetermined number of times.

Preferably, each combination table is an orthogonal array table formed with a few values pre-selected with respect to all the parameters required for optimal power determination. The orthogonal array table has been one of experiment methods for finding out an optimal condition with minimum cases in consideration of influences among elements.

Preferably, at least one combination table is prepared and stored by optical disk kind.
Therefore, an optical disk recording/reproducing apparatus determines the kind of a disk when the disk is loaded therein, reads out a corresponding combination table of the pre-stored combination tables depending upon the disk kinds, and performs recording tests to determine an optical power.

The parameters to be determined can be easily understood by those skilled in the art to which the present invention pertains, and values of the parameters for performing the recording tests can be easily set through experiences and experiments by those skilled in the art, on which detailed descriptions will be omitted.

Further, the present invention relates to a method for determining optimal power for recording/reproducing optical disks, so the present invention can be applied to all apparatuses for recording/reproducing optical disks such as CD, DVD, BD, and the like.

BRIEF DESCRIPTION OF THE DRAWINGS

Fig. 1 is a schematic block diagram for showing an optical disk recording/reproducing apparatus according to a preferred embodiment of the present invention;
Fig. 2 is a flow chart for explaining an optimal power determination method for the optical disk recording/reproducing apparatus of Fig. 1;
Fig. 3 is a view for illustrating a combination table for recording tests.

BEST MODE FOR CARRYING OUT THE INVENTION

Hereinafter, the present invention will be described in detail with reference to the accompanying drawings.

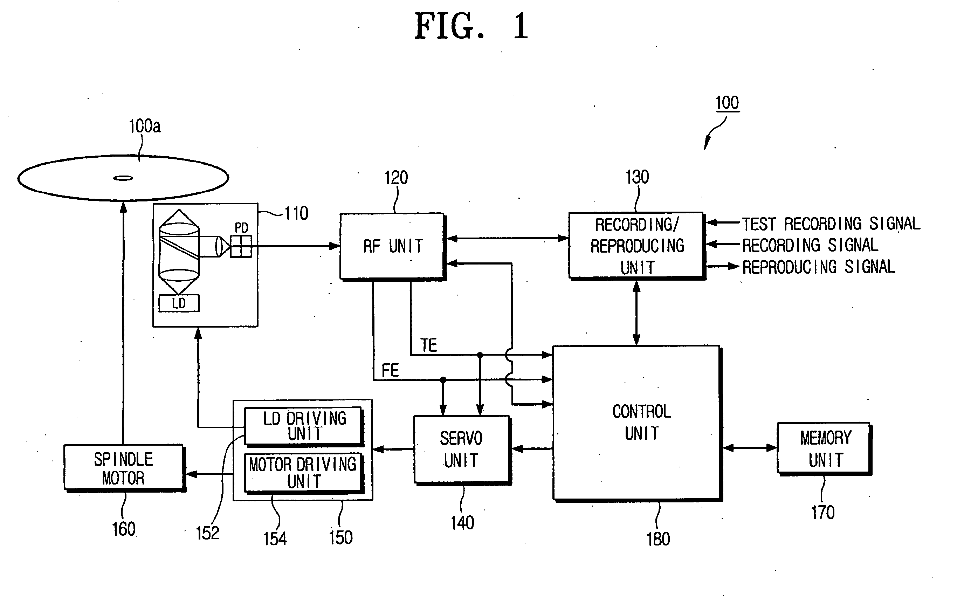

Fig. 1 is a schematic block diagram for showing an optical disk recording/reproducing apparatus according to a preferred embodiment of the present invention.
Referring to Fig. 1, the optical disk recording/reproducing apparatus 100 according to the present invention has a pickup unit 110, an RF unit 120, a recording/reproducing unit 130, a servo unit 140, a driving unit 150, a spindle motor 160, a memory unit 170, and a control unit 180. Fig. 1 is a view for showing only units (shown in blocks) related to the optimal power determination from the optical disk recording/reproducing apparatus 100 according to the present invention, and the other blocks are not shown for the sake of explanations.

The pickup unit 110 irradiates a laser beam onto an optical disk 100a to record data, and reads out and reproduces the data recorded on the optical disk 100a. To do this, the pickup unit 110 includes a laser diode (LD) for irradiating a laser beam of certain power onto the optical disk 100a, an object lens for focusing the beam irradiated from the LD onto the surface of the optical disk 100a, a photo diode (PD) which is a sensor for detecting a beam reflected from the surface of the optical disk 100a, a focusing actuator for driving the object lens upwards and downwards to precisely focus the beam irradiated from the LD onto the surface of the optical disk 100a, a tracking actuator for driving the object lens to the left and right in order for the pickup unit 110 to precisely trace the tracks formed on the optical disk 100a, and so on.

The RF unit 120 amplifies and rectifies an RF signal outputted from the pickup unit 110 into a modulated signal such as an Eight to Fourteen modulation (EFM) signal, and provides the EFM signal to the recording/reproducing unit 130. Further, the RF unit 120 detects a focusing error (FE) and a tracking error (TE) from the RF signal, and applies an FE signal and a TE signal corresponding to the detected errors to the control unit 180 and the servo unit 140.

The recording/reproducing unit 130 records on the optical disk 100a a recording signal externally inputted according to a recording command signal sent from the control unit 180 which will be later described, and reads out and reproduces data recorded on the optical disk 100a according to a reproducing command signal. That is, if the recording command signal is inputted from the control unit 180, the recording/reproducing unit 130 converts a recording signal or a test recording signal for setting a recording power, which is inputted in accordance with the recording command signal, into a format of data for an output that can be recorded on the optical disk 100a. Further, if the reproducing command signal is received from the control unit 180, the recording/reproducing unit 130 reads out the data recorded on the optical disk 100a, and decodes and reproduces the read-out data.

The servo unit 140 controls a focusing servo and a tracking servo based on the TE signal and FE signal that are outputted from the RF unit 120. Further, the servo unit 140 controls a motor driving unit 154 for controlling the spindle motor 160, which is a driving motor for the optical disk 100a, to be driven at a constant linear velocity(hereinafter, referred to as "CLV"), and an LD driving unit 152 for driving the laser diode to emit a laser beam corresponding to a recording power and a reproducing power.

The driving unit 150 has the LD driving unit 152 and the motor driving unit 154.

The LD driving unit 152 drives the laser diode based on the controls of the servo unit 140. For example, the LD driving unit 152 drives the laser diode to output a laser beam corresponding to a recording power and a reproducing power necessary for recording certain data on the optical disk 100a and reproducing the recorded data on the optical disk 100a.

The motor driving unit 154 supplies to the spindle motor 160 a driving voltage for driving the spindle motor 160 according to a rotation speed control signal for the spindle motor 160 that is outputted from the servo unit 140. That is, the motor driving unit 154 drives the spindle motor 160 to rotate the optical disk 100a at a constant linear velocity. In here, the spindle motor 160 is a DC motor for rotating the optical disk 100a, and rotates forwards and reversely depending upon a driving voltage supplied from the motor driving unit 154.

The memory unit 170 consists of a ROM for storing control programs for controlling various operations of the optical disk recording/reproducing apparatus 100 and a RAM for temporarily storing various data occurring during the various operations. Further, the memory unit 170 according to the present embodiment stores combination tables each formed with combinations of pre-selected values with respect to respective parameters for determining an optimal power for a laser beam emitted from the pickup unit 110. It is preferable that at least one combination table is prepared and stored by optical disk kind. Each combination table is formed in an orthogonal array of values pre-selected for parameters required for optimal power determination. In here, the parameters for determining an optimal power may include power-related parameters such as Write Power, Erase Power, Bias Power, Peak Power, and the like, time-related parameters such as Delay Pulse, Write Pulse, Last Pulse, Off Pulse, and so on, but not limited to the above parameters.

The control unit 180 controls overall operations of the optical disk recording/reproducing apparatus 100 according to the various control programs stored in the memory unit 170. The control unit 180 operates the optical disk recording/reproducing apparatus 100 in a record mode for recording to-be-recorded data (hereinafter, referred to as record data) on a loaded optical disk 100a or in a reproducing mode for reproducing data recorded on the optical disk 100a according to an operation mode.

If the optical disk 100a is loaded, the control unit 180 determines the kind of an optical disk 100a based on a signal outputted from the RF unit 120 in correspondence with the loaded optical disk 100a. For example, the control unit 180 determines the kind of an optical disk 100a based on the level of an FE signal outputted from the RF unit 120, but not limited to this fashion. The optical disk is classified into any one of CD-ROM, CD-R, CD-RW, DVD-ROM, DVD-R, DVD-RW, and DVD-RAM depending upon the level of the FE signal.

If the optical disk 100a loaded in the above manner is determined as a recordable disk such as R, RW, or RAM, the control unit 180 performs an optimal record power control (OPC) process for determining power optimal for the loaded optical disk 100a. The OPC process can be implemented to be immediately carried out if the optical disk 100a is determined as a recordable disk, and, in another way, the OPC process can be implemented to be carried out before a recording job is performed with a recording request signal externally received. The recording request signal can be received through a key operation unit(not shown) provided on the main body of the optical disk recording/reproducing apparatus 100 or a remote controller(not shown).

The control unit 180 reads out of the memory unit 170 a combination table corresponding to the kind of the loaded optical disk 100a, performs recording tests with combinations listed on the read-out combination table, and determines an optimal power based on a result of the performance.

For descriptions in more detail, the control unit 180 temporarily stores in the memory unit 170 a first jitter value which is a first recording state information value obtained from the recording tests done with the combinations listed on the combination table. Further, the control unit 180 predicts a result value as to a combination of parameter values not included on the combination table based on the jitter value stored in the memory unit 170, and calculates a second jitter value which is a second recording state information value. The control unit 180 decides as an optimal combination a combination having the minimum jitter value out of the first recording state information value and the second recording state information value. Detailed descriptions on a method for deciding the optimal combination will later made in detail.

The control unit 180 stores in the memory unit 170 values of the parameters corresponding to the decided optimal combination. Thereafter, if the recording request signal is received through the key operation unit, the control unit 180 processes a recording job with optimal parameter values stored in the memory unit 170.

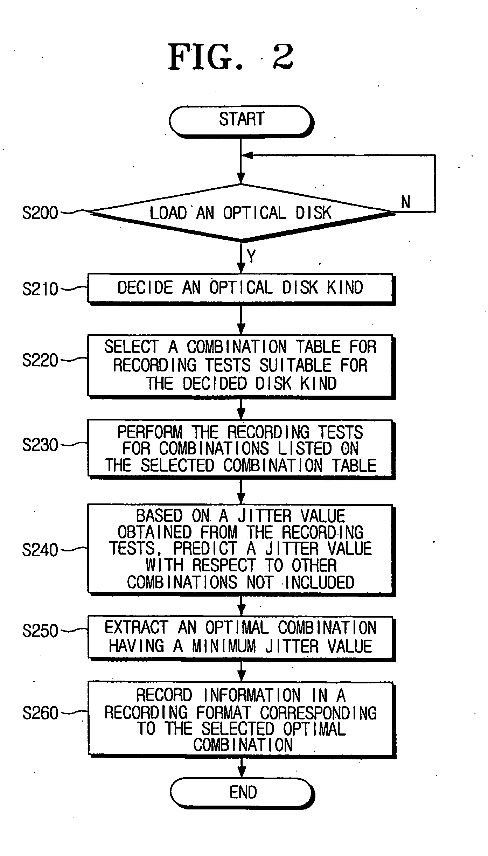

Hereinafter, descriptions are made on an optimal power determination method according to a preferred embodiment of the present invention with reference to Fig. 1 to Fig. 3.

Referring to Fig. 1 to Fig. 3, if the optical disk 100a is decided to be loaded in the optical disk recording/reproducing apparatus 100 (S200), the control unit 180 recognizes the kind of the loaded optical disk 100a (S210). If the loaded optical disk 100a is recognized to be a recordable disk, the control unit 180 reads out of the memory unit 170 a combination table corresponding to the loaded optical disk 100a (S220).

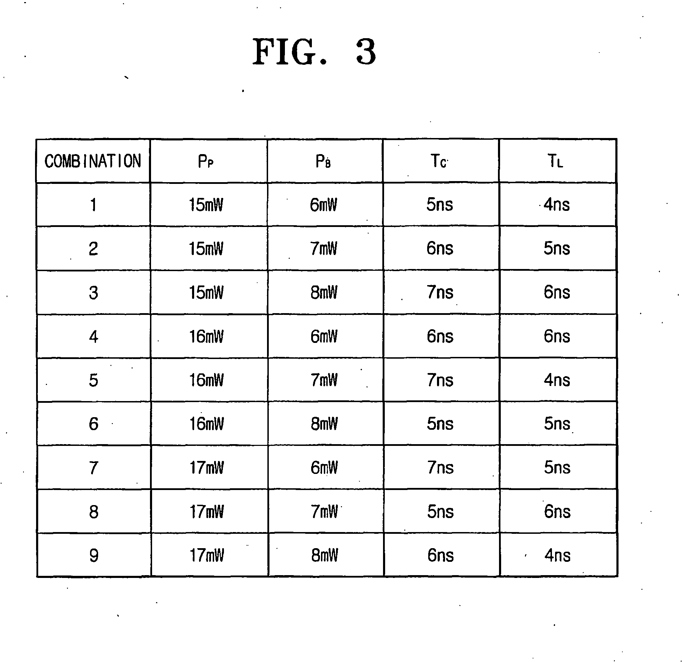

Fig. 3 is a view for illustrating a combination table for recording tests.

Fig. 3 illustrates a combination table corresponding to a disk requiring four parameters such as Peak Power $P_P$, Bias Power $P_B$, Cooling Pulse $T_C$, and Last Pulse $T_L$ in order to determine an optimal power. Each parameter has three different pre-selected parameter values. That is, there are 15mW, 16mW, and 17mW selected for the $P_P$ value, 6mW, 7mW, and 8mW selected for the $P_B$ value. Further, there are 5ns, 6ns, and 7ns selected for the $T_C$ value, and 4ns, 5ns, and 6ns selected for the $T_L$ value. However, the present invention is not limited to parameters and values, but can have more parameters such as Write Power, Erase Power, Write Pulse, Off Pulse, and the like, in addition to the above parameters according to the characteristics of a loaded optical disk.

The control unit 180 records test data onto the optical disk 100a in use of parameter values set in each of the certain combinations (nine combinations as shown in Fig. 3) listed on the read-out combination table, and reproduces the recorded test data to perform the recording tests calculating jitter values (S230). At this time, the test data is recorded in a Power Calibration Area (PCA) which is a test area for determining an optimal power.

Further, the control unit 180 predicts a result value with respect to the other combinations for which the recording tests are not carried out, based on the jitter value obtained from a recording test performance, and calculates a second recording state information value (S240). For example, as in Fig. 3, 81 combinations can be made in use of four parameters required for optima power determination and three values predetermined for each of the parameters. The present embodiment can determine parameter values for an optimal power without carrying out the recording tests as to the 81 combinations. That is, the present invention performs the recording tests as to only 9 combinations listed on a combination table, and predicts parameter values as to the other combinations not included on the combination table based on jitter values obtained from the recording test performances.

The control unit 180 calculates jitter values predicted as to the other combinations for which the recording tests are not performed in use of Equation 1 as follows:

[Equation 1]

$$SNR_1 = 10*\log(1/MSD_1)$$

$$MSD_1 = (y1^2 + y2^2 + y3^2 + ...+ yn^2)$$

In here, the $MSD_1$ denotes a jitter value obtained through a recording test as to the combination 1, and $SNR_1$ denotes a signal-to-noise ratio for the $MSD_1$. Further, y1 to yn denote the number of times the record tests are carried out as to the combination 1. The SNRs can be calculated with respect to the remaining combinations, that is, combination 2 to combination 9, in use of Equation 1.

If the SNR is calculated with respect to each combination according to the above method, it can be seen how parameter values corresponding to the elements $P_P$, $P_B$, $T_C$, and $T_L$ affect SNRs in use of the calculated SNR. For example, if an average value over $SNR_1$, $SNR_2$, and $SNR_3$ calculated for combinations 1, 2, and 3 is calculated, it can be seen what an SNR would be in case that the first parameter value (15mW) of $P_B$ is selected, and, if an average value over $SNR_1$, $SNR_4$, and $SNR_7$ calculated for combinations 1, 4, and 7 is calculated, it can be seen what an SNR would be in case that the first parameter (6mW) of $P_B$ is selected. In the above method, the SNR can be calculated when the respective parameters are selected with respect to the remaining elements. In this case, a combination of parameter values having the largest SNR with respect to the respective elements can be predicted as an optimal combination.

The control unit 180 extracts an optimal combination having a minimum jitter value from a jitter value obtained from recording test performances and a jitter value predicted based on the jitter value (S250). For example, the control unit 180 extracts the predetermined number of combinations out of the 81 combinations, for example, three combinations, in ascending order of combination jitter values, that is, the least jitter value, the second least jitter value, and the third least jitter value, and the recording tests are performed with respect to the predetermined number of extracted combinations. If the recording tests as to the predetermined number of the extracted combinations are completed, the control unit 180 calculates a jitter value for the predetermined number of combinations as to which the recording tests are performed, and determines as an optimal combination the combination having the minimum jitter value of the calculated jitter values. At this time, the recording tests are not necessary for the combinations out of the predetermined number of extracted combinations as to which the recording tests have been carried out.

In another way, the control unit 180 predicts jitter values for the other combinations, that is, 72 combinations, based on the jitter value obtained through the recording tests, and extracts the predetermined number of combinations out of the other combinations, for example, three combinations, in ascending order of combination jitter values. Further, the control unit 180 carries out the recording tests for the predetermined number of extracted combinations. The control unit 180 compares the jitter values obtained through the recording test performance with respect to the three combinations to the jitter values obtained through the recording test performance with respect to the combinations listed on the combination table, and determines as an optimal combination the combination having a minimum jitter value as a result of the comparison.

The parameter values that the optimal combination determined in the above method has become the optimal parameter values for determining an optimal power. The control unit 180 stores the determined optimal parameter values in the memory unit 170. Thereafter, if a recording request signal is received for record data through a key operation unit, the control unit 180 processes a recording job with optimal parameter values stored in the memory unit 170 (S260).

As described so far, the present invention can carry out recording tests in use of combination tables each formed with combinations of parameter values required for optimal power determination, predict a result for combinations not included on the combination tables based on jitter values obtained through the recording tests, and determine optimal parameter values having an optimal power. That is, the present invention can determine optimal parameter values for an optimal power with the recording tests carried out only the predetermined number of times, to thereby reduce time required for the optimal power determination.

Although the preferred embodiments of the present invention have been described, it will be understood by those skilled in the art that the present invention should not be limited to the described preferred embodiments, but various changes and modifications can be made within the scope of the present invention as defined by the appended claims.

**Claims**

1. An optimal power determination method for recording information onto an optical disk, comprising the steps of:

    deciding (S210) a kind of a loaded optical disk and reading out (S220) a combination table corresponding to the decided kind of the loaded optical disk before performing the recording tests, wherein the combination tables are prepared and stored by optical disk kind in advance, and wherein each of said combination tables comprises a plurality of combinations of preselected values for parameters for optimal power determination,
    performing (S230) recording tests for each of said plurality of combinations of preselected values for parameters for optimal power determination.
    determining (S240, S250) optimal values for the parameters from a result of a recording test performance to determine the power, wherein the step for determining the optimal values determines a combination of the parameter values based on first recording state information values obtained as a result of the recording tests and second recording state information values calculated from predictions of results for combinations of values of parameters not included in the combination tables from the first recording state information values.

2. The optimal power determination method as claimed in claim 1, wherein each combination table is formed in an orthogonal array of the values of the parameters for the optimal power determination.

3. The optimal power determination method as claimed in claim 1 or 2, wherein the recording tests are performed by recording test data onto the optical disk and measuring a jitter value calculated from a reproduction signal for the recorded test data.

4. The optimal power determination method as claimed in claim 3, wherein the step for determining the optimal values extracts the predetermined number of combinations predicted to have the least jitter value out of the second recording state values, obtains third recording state information values by performing the recording tests for the extracted combinations, and determines as an optimal combination a combination having the least jitter value out of the first recording state information values and the third recording state information values.

5. An optical disk recording apparatus (100) for recording information onto an optical disk, comprising:

a pickup unit (110) for irradiating a beam onto the optical disk and recording information;
a memory unit (170) for storing combination tables each formed and registered in advance with a plurality of combinations of preselected values for parameters for determining an optimal power of the beam irradiated from the pickup unit,
a control unit (180) for performing recording tests using the combination tables, wherein the control unit is adapted to determine a combination of the parameter values based on first recording state information values obtained as a result of the recording tests and second recording state information values calculated from predictions of results for combinations of values of parameters not included on the combination tables from the first recording state information values; and
wherein the combination tables are prepared and stored in the memory unit by optical disk type, and the control unit is adapted to decide a type of a loaded optical disk and for reading out a combination table corresponding to the decided kind of the loaded optical disk before performing the recording tests.

6. The optical disk recording apparatus as claimed in claim 5, wherein the combination tables are each formed in an orthogonal array of values for parameters for determining the optical power.

7. The optical disk recording apparatus as claimed in claim 5 or 6, wherein the optimal power is determined by extracting the predetermined number of combinations predicted to have the least jitter value out of the second recording state values, obtaining third recording state information values through recording test performances for the extracted combinations, and selecting a combination having the least jitter value out of the first recording state information values and the third recording state information values.

**Patentansprüche**

1. Verfahren zur Bestimmung optimaler Leistung zwecks Aufzeichnens von Informationen auf einer optischen Platte, umfassend die Schritte:

Feststellen (S210) einer Art einer geladenen optischen Platte und Auslesen (S220) einer Kombinationstabelle, die der festgestellten Art der geladenen optischen Platte entspricht, vor Durchführen der Aufzeichnungstests, wobei die Kombinationstabellen nach Art optischer Platte im Voraus erstellt und gespeichert werden, und wobei jede der Kombinationstabellen eine Mehrzahl von Kombinationen vorgewählter Werte für Parameter zur Bestimmung optimaler Leistung umfasst;
Durchführen (S230) von Aufzeichnungstests für jede aus der Mehrzahl von Kombinationen vorgewählter Werte für Parameter zur Bestimmung optimaler Leistung,
Bestimmen (S240, S250) optimaler Werte für die Parameter anhand eines Ergebnisses einer Aufzeichnungstestdurchführung, um die Leistung zu bestimmen, wobei der Schritt zur Bestimmung der optimalen Werte eine Kombination der Parameterwerte bestimmt auf Grundlage erster Aufzeichnungszustandsinformationswerte, erhalten als Ergebnis der Aufzeichnungstests, und zweiter Aufzeichnungszustandsinformationswerte, berechnet aus Vorhersagen von Ergebnissen für nicht in den Kombinationstabellen enthaltene Kombinationen von Parameterwerten anhand der ersten Aufzeichnungszustandsinformationswerte.

**2.** Verfahren zur Bestimmung optimaler Leistung nach Anspruch 1, wobei jede Kombinationstabelle in einem orthogonalen Feld der Werte der Parameter zur Bestimmung optimaler Leistung gebildet wird.

**3.** Verfahren zur Bestimmung optischer Leistung nach Anspruch 1 oder 2, wobei die Aufzeichnungstests vorgenommen werden durch Aufzeichnen von Testdaten auf der optischen Platte und Messen eines aus einem Wiedergabesignal für die aufgezeichneten Testdaten errechneten Jitterwerts.

**4.** Verfahren zur Bestimmung optischer Leistung nach Anspruch 3, wobei im Schritt zur Bestimmung der optimalen Werte die vorgegebene Anzahl an Kombinationen, die laut Vorhersage den niedrigsten Jitterwert unter den zweiten Aufzeichnungszustandsinformationswerten aufweisen, extrahiert wird, dritte Aufzeichnungszustandsinformationswerte erhalten werden durch Vornehmen der Aufzeichnungstests für die extrahierten Kombinationen, und als optimale Kombination eine Kombination bestimmt wird, die den niedrigsten Jitterwert unter den ersten Aufzeichnungszustandsinformationswerten und den dritten Aufzeichnungszustandsinformationswerten aufweist.

**5.** Aufzeichnungsgerät (100) für optische Platten zum Aufzeichnen von Informationen auf einer optischen Platte, umfassend:

eine Abtast- bzw. Pickup-Einheit (110) zum Werfen eines Strahls auf die optische Platte und zum Aufzeichnen von Informationen;
eine Speichereinheit (170) zur Speicherung von Kombinationstabellen, die jeweils im Voraus gebildet und erfasst werden mit einer Mehrzahl von Kombinationen vorgewählter Werte für Parameter zur Bestimmung einer optimalen Leistung des aus der Abtast- bzw. Pickup-Einheit geworfenen Strahls,
eine Steuerungseinheit (180) zur Durchführung von Aufzeichnungstests unter Verwendung der Kombinationstabellen, wobei die Steuerungseinheit angepasst ist, um eine Kombination der Parameterwerte zu bestimmen auf Grundlage erster Aufzeichnungszustandsinformationswerte, erhalten als Ergebnis der Aufzeichnungstests, und zweiter Aufzeichnungszustandsinformationswerte, berechnet aus Vorhersagen von Ergebnissen für nicht in den Kombinationstabellen enthaltene Kombinationen von Parameterwerten anhand der ersten Aufzeichnungszustandsinformationswerte; und
wobei die Kombinationstabellen erstellt und gespeichert werden in der Speichereinheit nach Art optischer Platte, und die Steuerungseinheit angepasst ist, um eine Art einer geladenen optischen Platte festzustellen und um eine Kombinationstabelle, die der festgestellten Art der geladenen optischen Platte entspricht, auszulesen vor Durchführung der Aufzeichnungstests.

**6.** Aufzeichnungsgerät für optische Platten nach Anspruch 5, wobei die Kombinationstabellen jeweils in einem orthogonalen Feld von Werten für Parameter zur Bestimmung der optischen Leistung gebildet werden.

**7.** Aufzeichnungsgerät für optische Platten nach Anspruch 5 oder 6, wobei die optimale Leistung bestimmt wird durch Extrahieren der vorgegebenen Anzahl an Kombinationen, die laut Vorhersage den niedrigsten Jitterwert unter den zweiten Aufzeichnungszustandsinformationswerten aufweisen, durch Erhalten dritter Aufzeichnungszustandsinformationswerte mittels Aufzeichnungstestdurchführungen für die extrahierten Kombinationen, und durch Auswählen einer Kombination, die den niedrigsten Jitterwert unter den ersten Aufzeichnungszustandsinformationswerten und den dritten Aufzeichnungszustandsinformationswerten aufweist.

**Revendications**

**1.** Procédé permettant de déterminer une puissance optimale pour enregistrer des informations sur un disque optique, comprenant les étapes consistant à :

décider (S210) d'un type d'un disque optique chargé et lire (S220) un tableau de combinaisons correspondant au type décidé du disque optique chargé préalablement à la réalisation des tests d'enregistrement, les tableaux de combinaisons étant préparés et stockés au préalable suivant le type du disque optimale, et chacun desdits tableaux de combinaisons comprenant une pluralité de combinaisons de valeurs présélectionnées de paramètres requis pour la détermination de la puissance optimale,
réaliser (S230) des tests d'enregistrement pour chaque combinaison de ladite pluralité de combinaisons de valeurs présélectionnées de paramètres requis pour la détermination de la puissance optique,
déterminer (S240, S250) les valeurs optimales de paramètres à partir d'un résultat de réalisation des tests d'enregistrement visant à déterminer la puissance, dans lequel l'étape de détermination des valeurs optimales détermine une combinaison de valeurs de paramètres en se fondant sur des premières valeurs d'informations d'état d'enregistrement obtenues en résultat des tests d'enregistrement et sur des deuxièmes valeurs d'informations d'état d'enregistrement calculées à partir de prédictions de résultats pour des combinaisons de valeurs de paramètres non incluses dans les tableaux de combinaisons issues des premières valeurs d'informations d'état d'enregistrement.

2. Procédé permettant de déterminer une puissance optimale selon la revendication 1, dans lequel chaque tableau de combinaisons est constitué sous la forme d'une matrice orthogonale des valeurs des paramètres requis pour la détermination de la puissance optimale.

3. Procédé permettant de déterminer une puissance optimale selon la revendication 1 ou 2, dans lequel les tests d'enregistrement sont réalisés en enregistrant des données de test sur le disque optique et en mesurant une valeur de gigue calculée à partir d'un signal de reproduction relatif aux données de test enregistrées.

4. Procédé permettant de déterminer une puissance optimale selon la revendication 3, dans lequel l'étape de détermination des valeurs optimales extrait le nombre prédéterminé de combinaisons dont il est prédit qu'elles aient la plus petite valeur de gigue parmi les deuxièmes valeurs d'état d'enregistrement, obtient des troisièmes valeurs d'informations d'état d'enregistrement en réalisant les tests d'enregistrement pour les combinaisons extraites, et détermine comme combinaison optimale une combinaison présentant la plus petite valeur de gigue parmi les premières valeurs d'informations d'état d'enregistrement et les troisièmes valeurs d'informations d'état d'enregistrement.

5. Appareil (100) d'enregistrement sur disque optique permettant d'enregistrer des informations sur un disque optique, comprenant :

une unité d'enregistrement (110) destinée à projeter un faisceau sur le disque optique et à enregistrer les informations ;
une unité de mémoire (170) destinée à stocker des tableaux de combinaisons préalablement constitués et pourvus chacun de l'enregistrement d'une pluralité de combinaisons de valeurs présélectionnées de paramètres requis pour la détermination d'une puissance optimale du faisceau projeté par l'unité d'enregistrement ;
une unité de commande (180) destinée à réaliser des tests d'enregistrement en utilisant les tableaux de combinaisons, l'unité de commande étant adaptée pour déterminer une combinaison des valeurs de paramètres en se fondant sur des premières valeurs d'informations d'état d'enregistrement obtenues en résultat des tests d'enregistrement et sur des deuxièmes valeurs d'informations d'état d'enregistrement calculées à partir de prédictions de résultats pour des combinaisons de valeurs de paramètres non incluses dans les tableaux de combinaisons issues des premières valeurs d'informations d'état d'enregistrement ; et
dans lequel les tableaux de combinaisons sont préparés et stockés dans l'unité de mémoire suivant le type du disque optique, et l'unité de commande est adaptée pour décider d'un type d'un disque optique chargé et pour lire un tableau de combinaisons correspondant au type décidé de disque optique chargé avant que ne soient réalisés les tests d'enregistrement.

6. Appareil d'enregistrement sur disque optique selon la revendication 5, dans lequel les tableaux de combinaisons sont chacun constitués sous la forme d'une matrice orthogonale de valeurs de paramètres requis pour la détermination de la puissance optique.

7. Appareil d'enregistrement sur disque optique selon la revendication 5 ou 6, dans lequel la puissance optimale est déterminée en extrayant le nombre prédéterminé de combinaisons dont il est prédit qu'elles aient la plus petite valeur de gigue parmi les deuxièmes valeurs d'état d'enregistrement, en obtenant des troisièmes valeurs d'informations d'état d'enregistrement grâce à la réalisation de tests d'enregistrement pour les combinaisons extraites, et en sélectionnant une combinaison présentant la plus petite valeur de gigue parmi les premières valeurs d'informations d'état d'enregistrement et les troisièmes valeurs d'informations d'état d'enregistrement.

# FIG. 1

# FIG. 2

START

S200 — LOAD AN OPTICAL DISK     N

Y

S210 — DECIDE AN OPTICAL DISK KIND

S220 — SELECT A COMBINATION TABLE FOR RECORDING TESTS SUITABLE FOR THE DECIDED DISK KIND

S230 — PERFORM THE RECORDING TESTS FOR COMBINATIONS LISTED ON THE SELECTED COMBINATION TABLE

S240 — BASED ON A JITTER VALUE OBTAINED FROM THE RECORDING TESTS, PREDICT A JITTER VALUE WITH RESPECT TO OTHER COMBINATIONS NOT INCLUDED

S250 — EXTRACT AN OPTIMAL COMBINATION HAVING A MINIMUM JITTER VALUE

S260 — RECORD INFORMATION IN A RECORDING FORMAT CORRESPONDING TO THE SELECTED OPTIMAL COMBINATION

END

# FIG. 3

| COMBINATION | P$_P$ | P$_B$ | T$_C$ | T$_L$ |
|---|---|---|---|---|
| 1 | 15mW | 6mW | 5ns | 4ns |
| 2 | 15mW | 7mW | 6ns | 5ns |
| 3 | 15mW | 8mW | 7ns | 6ns |
| 4 | 16mW | 6mW | 6ns | 6ns |
| 5 | 16mW | 7mW | 7ns | 4ns |
| 6 | 16mW | 8mW | 5ns | 5ns |
| 7 | 17mW | 6mW | 7ns | 5ns |
| 8 | 17mW | 7mW | 5ns | 6ns |
| 9 | 17mW | 8mW | 6ns | 4ns |

**EP 1 665 236 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030035355 A